# EUROPEAN PATENT APPLICATION

(11) **EP 4 219 025 A2**
(43) Date of publication of application: **02.08.2023**
(21) Application number: 23160945.4
(22) Date of filing: 24.05.2018
(51) Int. Cl.: B05D 5/06, B05D 7/14, B05D 7/00, B05D 5/00

(54) **MULTI-LAYERED FINISHES FOR METAL SUBSTRATES**

(30) Priority: 07.06.2017 US 201762516268 P
(62) Divisional of application: 18734333.0
(71) Applicant: Novelis, Inc., Atlanta, GA 30326 (US)
(72) Inventor: HOEHNE, Joerg, 37079 Goettingen (DE); SCHWAGER, Caecilia, 37120 Bovenden (DE)
(74) Representative: Dey, Michael

(57) **Abstract**

Described herein are coating systems for preparing multi-layered finishes, multi-layered finish coated substrates, and methods of applying multi-layered finishes to substrates. A coating system for preparing the multi-layered finishes includes a base coating component and a clear coating component comprising non-lightfast colorant particles having a color intensity. The color intensity of the colorant particles decreases upon exposure to light.

## Description

### CROSS-REFERENCE TO RELATED APPLICATION

This application claims the benefit of U.S. Provisional Application No. 62/516,268, filed June 7, 2017, which is incorporated herein by reference in its entirety.

### FIELD

This disclosure relates to the fields of coatings, material science, material chemistry, metallurgy, aluminum alloys, steel, and related fields. More specifically, the disclosure provides novel multi-layered finishes for metal substrates that can be used in a variety of applications, including, for example, construction applications and coil coatings.

### BACKGROUND

Colored metal products are used extensively in the construction industry. For example, aluminum materials provide various aesthetic options in the residential construction industry for roofing and other materials.

### SUMMARY

Covered embodiments of the invention are defined by the claims, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

Described herein are multi-layered finish coated substrates, coating systems for preparing multi-layered finishes, and methods of applying multi-layered finishes to substrates. A multi-layered finish coated substrate comprises a substrate, a base coating layer adhered to the substrate, and a clear coating layer comprising non-lightfast colorant particles having a color intensity, wherein the color intensity of the non-lightfast colorant particles decreases upon exposure to light. The color intensity of the non-lightfast colorant particles can decrease by at least about 10 % as compared to an original color intensity of the non-lightfast colorant particles upon exposure to light (e.g., at least about 50 %, at least about 75 %, or at least about 90 % as compared to an original color intensity of the non-lightfast colorant particles upon exposure to light). Optionally, the non-lightfast colorant particles are substantially colorless after exposure to light. The non-lightfast colorant particles can comprise a dye, a pigment, an additive, or a mixture of these. Optionally, the non-lightfast colorant particles comprise at least one olefin group.

The substrate can comprise a metal substrate, such as an aluminum substrate or a steel substrate. Optionally, the aluminum substrate comprises a roofing panel or a coil. The base coating layer can comprise a pigment or a dye. Optionally, the base coating layer comprises a printed pattern. Optionally, the clear coating layer can be adhered to the base coating layer.

In some examples, the multi-layered finish coated substrate can comprise a third layer. The third layer can optionally comprise a pigment or dye. Optionally, the third layer comprises a printed coating (e.g., a coating having a wood-grain effect, a patina effect, or an animal print effect). In some examples, the third layer can be adhered to the base coating layer and the clear coating layer can be adhered to the third layer.

A coating system, optionally for use in preparing the multi-layered finishes as described herein, is also provided. A coating system as described herein comprises a base coating component and a clear coating component comprising non-lightfast colorant particles having a color intensity. The color intensity of the non-lightfast colorant particles decreases upon exposure to light. Optionally, the concentration of the non-lightfast colorant particles in the clear coating component is from about 0.01 wt. % to about 30 wt. %.

Methods of applying a multi-layered finish to a substrate surface are also described herein. A method of applying a multi-layered finish to a substrate surface comprises applying a base coating component to the substrate surface, drying the base coating component to form a base coating layer, applying a clear coating component, and drying the clear coating component to form a clear coating layer. The clear coating component can optionally comprise non-lightfast colorant particles having a color intensity. Optionally, the thickness of the base coating layer can be from about 3 µm to about 25 µm. Optionally, the thickness of the clear coating layer can be from about 3 µm to about 50 µm. The method can further comprise a step of applying a third coating component and drying the third coating component to form a third coating layer. The applying the third coating component and drying the third component steps can be performed after the step of drying the base coating and before the step of applying the clear coating. Optionally, the third coating component comprises a printed coating component.

Further described herein are coated metal substrates comprising a metal substrate, a base layer, and a coating layer comprising a pigment. The metal substrate can be a coil or a roofing panel. The pigment absorbs electromagnetic radiation at a wavelength from about 400 nm to about 700 nm and is transparent to electromagnetic radiation at a wavelength above about 700 nm. In some cases, the base layer can be adhered to the metal substrate. The coating layer can then be adhered to the base layer. In some cases, the coating layer can be adhered to the metal substrate. The metal substrate can optionally comprise an aluminum substrate or a steel substrate. Optionally, the metal substrate comprises a surface that reflects electromagnetic radiation at a wavelength above about 700 nm.

The coating layer can exhibit a black color. In some examples, the pigment in the coating layer is an organic black pigment, such as a perylene black. The coated metal substrate can have a solar reflective index of at least 50 (e.g., at least 75). The coated metal substrate can have an end temperature at least 15 °C lower than a control coated metal substrate, wherein the control coated metal substrate comprises a metal substrate and a coating layer comprising carbon black pigments. The end temperature is measured after approximately one hour of exposure to sunlight. Optionally, the end temperature is at least 20 °C lower or at least 25 °C lower than the control coated metal substrate.

Other objects, aspects, and advantages will become apparent upon consideration of the following detailed description of non-limiting examples and the drawings.

### BRIEF DESCRIPTION OF THE DRAWINGS

Figure 1A shows the color change in an aluminum sample after exposure to ultraviolet-A (UVA) and ultraviolet-B (UVB) light for 500 hours, 750 hours, and 1000 hours. Figure 1B shows the color change in a sample from zinc to old zinc.
Figure 2 shows the color change in aluminum samples coated with a color-changing finish that includes a polyester resin (VP 100) in the clear coating layer and a polyvinylidene fluoride resin (PVDF) in the clear coating layer after exposure to UVB light for 505 hours or 1000 hours.
Figure 3 shows pictures of a standard sample with a white base coat (left panel) and a temperature-control coated metal substrate with a white base coat (right panel) after one hour of exposure to sunlight.
Figure 4 shows pictures of a standard sample (left panel) and a temperature-control coated metal substrate with a white base coat (right panel) after one hour of exposure to sunlight.
Figure 5 shows pictures of a temperature-control coated metal substrate with a white base coat (left panel) and a temperature-control coated metal substrate with a gray base coat (right panel) after one hour of exposure to sunlight.
Figure 6 shows pictures of temperature-control coated metal substrates with various temperature-control coatings after one hour of exposure to sunlight.

### DETAILED DESCRIPTION

Provided herein are multi-layered finish coated substrates, coating systems for preparing multi-layered finishes, and methods of applying multi-layered finishes to substrates. The coating systems and finishes described herein provide color-changing effects to the substrates to which the finishes are applied. In examples containing non-lightfast colorant particles in the colored clear coating layer (which can be the outermost layer in the multi-layered finish), upon exposure to light, the colorant particles will decompose and decrease in color intensity. Such a decrease in color intensity can result in a colorless or substantially colorless outermost layer, which in turn reveals the color of an underlying layer (e.g., the color of the base layer or of the third layer). As used herein, the term "substantially colorless" means that less than 10% of the original color intensity remains (e.g., less than 5 %, less than 4 %, less than 3 %, less than 2 %, less than 1 %, less than 0.5 %, less than 0.1 %, less than 0.05 %, or less than 0.01 %). The color intensity and change in color intensity can be measured using, for example, a spectrophotometer or a colorimeter. The color intensity can be evaluated using the International Commission on Illumination (i.e., Commission internationale de l'eclairage, or CIE) coordinate system.

Suitable substrates for coating with the finishes described herein include metal substrates (e.g., aluminum or steel substrates). As used herein, the substrate is considered to be coated when a finish component is in contact with at least a portion of a surface of the substrate. Optionally, the entirety of a surface of a substrate can be coated with a finish component as described herein. Optionally, more than one surface of a substrate can be coated with a finish component as described herein. Suitable substrates include substrates in the automotive industry (e.g., car panels), in the can industry (e.g., can end stock), in the construction industry (e.g., roofing panels), or any other suitable industry.

### Definitions and Descriptions

As used herein, the terms "invention," "the invention," "this invention" and "the present invention" are intended to refer broadly to all of the subject matter of this patent application and the claims below. Statements containing these terms should be understood not to limit the subject matter described herein or to limit the meaning or scope of the patent claims below.

In this description, reference is made to alloys identified by aluminum industry designations, such as "series" or "3xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, the meaning of "a," "an," and "the" includes singular and plural references unless the context clearly dictates otherwise.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g., 1 to 6.1, and ending with a maximum value of 10 or less, e.g., 5.5 to 10.

### Coating Systems and Coated Substrates

Described herein are coating systems that can be used to prepare coatings and multi-layered finishes on a substrate. In some examples, the coating systems can include non-lightfast colorant particles in the outermost layer and can therefore produce color-changing finishes. In other examples, the coating systems can include selectively absorbent pigments and can therefore produce temperature-control coatings. The color-changing finishes and temperature-control coatings, along with substrates coated with such finishes, are further described below.

### Color-Changing Finishes and Coated Substrates

A color-changing finish can be prepared from a coating system that includes a base coating component and a clear coating component. The base coating component can include any component conventionally used in a base coating composition, including polymers such as acrylic polymers or polyesters. Optionally, the base coating component can include one or more crosslinking agents. The base coating component can also include a pigment or dye. The base coating component can further include a carrier, such as an aqueous or a solvent-based carrier.

The clear coating component includes non-lightfast colorant particles having a first color intensity. As used herein, non-lightfast colorant particles refer to the unstable colorant particles that decompose upon exposure to light, resulting in loss of color. The color intensity of the colorant particles can decrease upon exposure to light, resulting in a second color intensity. Optionally, the light is ultraviolet light or radiation, such as ultraviolet light or radiation included in sunlight.

The clear coating component can also include one or more polymers such as acrylic polymers or polyesters. Optionally, the clear coating component can include one or more crosslinking agents. The clear coating component can also include a pigment or dye. The clear coating component can include a carrier, such as an aqueous or a solvent-based carrier. The concentration of the non-lightfast colorant particles in the clear coating component can be from about 0.01 wt. % to about 30 wt. % based on the weight of the clear coating component. For example, the concentration of the non-lightfast colorant particles can be from about 0.05 wt. % to about 25 wt. %, from about 0.1 wt. % to about 20 wt. %, from about 0.5 wt. % to about 15 wt. %, from about 1 wt. % to about 10 wt. %, or from about 2 wt. % to about 8 wt. %. The concentration can optionally be about 0.01 wt. %, about 0.02 wt. %, about 0.03 wt. %, about 0.04 wt. %, about 0.05 wt. %, about 0.06 wt. %, about 0.07 wt. %, about 0.08 wt. %, about 0.09 wt. %, about 0.1 wt. %, about 0.2 wt. %, about 0.3 wt. %, about 0.4 wt. %, about 0.5 wt. %, about 0.6 wt. %, about 0.7 wt. %, about 0.8 wt. %, about 0.9 wt. %, about 1.0 wt. %, about 1.5 wt. %, about 2.0 wt. %, about 2.5 wt. %, about 3.0 wt. %, about 3.5 wt. %, about 4.0 wt. %, about 4.5 wt. %, about 5.0 wt. %, about 5.5 wt. %, about 6.0 wt. %, about 6.5 wt. %, about 7.0 wt. %, about 7.5 wt. %., 8.0 wt. %, about 8.5 wt. %, about 9.0 wt. %, about 9.5 wt. %, about 10.0 wt. %, about 10.5 wt. %, about 11.0 wt. %, about 11.5 wt. %, about 12.0 wt. %, about 12.5 wt. %, about 13.0 wt. %, about 13.5 wt. %, about 14.0 wt. %, about 14.5 wt. %, about 15.0 wt. %, about 15.5 wt. %, about 16.0 wt. %, about 16.5 wt. %, about 17.0 wt. %, about 17.5 wt. %, about 18.0 wt. %, about 18.5 wt. %, about 19.0 wt. %, about 19.5 wt. %, about 20.0 wt. %, about 20.5 wt. %, about 21.0 wt. %, about 21.5 wt. %, about 22.0 wt. %, about 22.5 wt. %, about 23.0 wt. %, about 23.5 wt. %, about 24.0 wt. %, about 24.5 wt. %, about 25.0 wt. %, about 25.5 wt. %, about 26.0 wt. %, about 26.5 wt. %, about 27.0 wt. %, about 27.5 wt. %, about 28.0 wt. %, about 28.5 wt. %, about 29.0 wt. %, about 29.5 wt. %, or about 30.0 wt. %.

The coating system can be applied to a substrate to form a multi-layered finish coated substrate. In some examples, the multi-layered finish coated substrate includes a substrate, a base coating layer, and a clear coating layer.

The base coating layer is prepared from the base coating component described herein. Specifically, the base coating layer can include a pigment or a dye. For example, the base coating layer can include metallic oxides (e.g., titanium dioxide, zinc oxide, and iron oxide), carbon black, organic pigments and dyes, metallic flake pigments, filler pigments, and silica. Optionally, the base coating layer can include a printed pattern.

The clear coating layer can be adhered to the base coating layer, such that the clear coating layer is the outermost layer of the finish (i.e., the layer of the finish exposed to the environment). The clear coating layer is prepared from the clear coating component, and includes non-lightfast colorant particles. The non-lightfast colorant particles have a color intensity, wherein the color intensity of the colorant particles decreases upon exposure to light. The color intensity of the colorant particles can decrease by a degree of at least 10% as compared to the original color intensity of the colorant particles. For example, the color intensity of the colorant particles can decrease by at least 50 % (e.g., at least 55 %, at least 60 %, at least 65 %, at least 70 %, at least 75 %, at least 80 %, at least 85 %, at least 90 %, at least 95 %, at least 96 %, at least 97 %, at least 98 %, at least 99 %, or 100 %) as compared to the original color intensity of the colorant particles. Optionally, the colorant particles are substantially colorless after exposure to light.

The non-lightfast colorant particles can include a dye, a pigment, and/or an additive. Suitable dyes include, but are not limited to, organic dyes (e.g., anthraquinone dyes, anthracene dyes, azo dyes, pyrazolone dyes, and quinone dyes). Suitable pigment includes, for example, bismuth oxychloride, carmine, zinc oxide, ferric oxide, ferrous oxide, kaolin, ultramarine violet-3519, ultramarine blue, chromium oxide, chromium hydroxide, silica, manganese violet, talc, mica, and titanium dioxide, among others. Suitable additives for use as the non-lightfast colorant particles include, but are not limited to, ultraviolet (UV) absorbents and protectants. Optionally, the colorant particles include at least one olefin group (i.e., at least one double bond). Not to be bound by theory, the colorant particles include double bonds that cleave with light and oxygen, which results in a color loss for the dye.

The dried clear coating layer includes from about 0.01 wt. % to about 30 wt. % of non-lightfast colorant particles. For example, the concentration of the non-lightfast colorant particles in the dried clear coating layer can be from about 0.05 wt. % to about 25 wt. %, from about 0.1 wt. % to about 20 wt. %, from about 0.5 wt. % to about 15 wt. %, from about 1 wt. % to about 10 wt. %, or from about 2 wt. % to about 8 wt. %. The concentration can optionally be about 0.01 wt. %, about 0.02 wt. %, about 0.03 wt. %, about 0.04 wt. %, about 0.05 wt. %, about 0.06 wt. %, about 0.07 wt. %, about 0.08 wt. %, about 0.09 wt. %, about 0.1 wt. %, about 0.2 wt. %, about 0.3 wt. %, about 0.4 wt. %, about 0.5 wt. %, about 0.6 wt. %, about 0.7 wt. %, about 0.8 wt. %, about 0.9 wt. %, about 1.0 wt. %, about 1.5 wt. %, about 2.0 wt. %, about 2.5 wt. %, about 3.0 wt. %, about 3.5 wt. %, about 4.0 wt. %, about 4.5 wt. %, about 5.0 wt. %, about 5.5 wt. %, about 6.0 wt. %, about 6.5 wt. %, about 7.0 wt. %, about 7.5 wt. %, about 8.0 wt. %, about 8.5 wt. %, about 9.0 wt. %, about 9.5 wt. %, about 10.0 wt. %, about 10.5 wt. %, about 11.0 wt. %, about 11.5 wt. %, about 12.0 wt. %, about 12.5 wt. %, about 13.0 wt. %, about 13.5 wt. %, about 14.0 wt. %, about 14.5 wt. %, about 15.0 wt. %, about 15.5 wt. %, about 16.0 wt. %, about 16.5 wt. %, about 17.0 wt. %, about 17.5 wt. %, about 18.0 wt. %, about 18.5 wt. %, about 19.0 wt. %, about 19.5 wt. %, about 20.0 wt. %, about 20.5 wt. %, about 21.0 wt. %, about 21.5 wt. %, about 22.0 wt. %, about 22.5 wt. %, about 23.0 wt. %, about 23.5 wt. %, about 24.0 wt. %, about 24.5 wt. %, about 25.0 wt. %, about 25.5 wt. %, about 26.0 wt. %, about 26.5 wt. %, about 27.0 wt. %, about 27.5 wt. %, about 28.0 wt. %, about 28.5 wt. %, about 29.0 wt. %, about 29.5 wt. %, or about 30.0 wt. %. The amount of colorant particles in the clear coating layer can be adjusted to achieve the desired effect in the product. By selecting a targeted amount of the non-lightfast colorant particles in the clear coating layer, an effect of a color-changing finish can be achieved. As the particles lose coloration, the finish layers beneath can become visible during a transition period until the particles lose essentially all coloration and then the finish layer beneath the clear coating may be primarily visible.

The color of one or more surfaces of the product can be quantified by a colorimetric measurement using the "CIE-LAB*" color scale, as described in "Hunter L, a, b Versus CIE 1976 L*a*b*," Application Notes, Insight on Color Vol. 13, No. 2 (2008). The CIE-LAB* color scale is based on the Opponent-Colors Theory, which assumes that receptors in the human eye perceive color as a pair of opposites: light-dark ("L* value"), red-green ("a* value"), and yellow-blue ("b* value").

The L* value refers to the lightness or darkness of the product surface. An L* value of 100 indicates the lightest color and an L* value of 0 indicates the darkest color. The a* value refers to the redness or greenness of the product surface. A positive a* value refers to the redness of the product surface, whereas a negative a* value refers to the greenness of the product surface. The b* value refers to the yellowness or blueness of the product surface. A positive b* value refers to the yellowness of the product surface, whereas a negative b* value refers to the blueness of the product surface

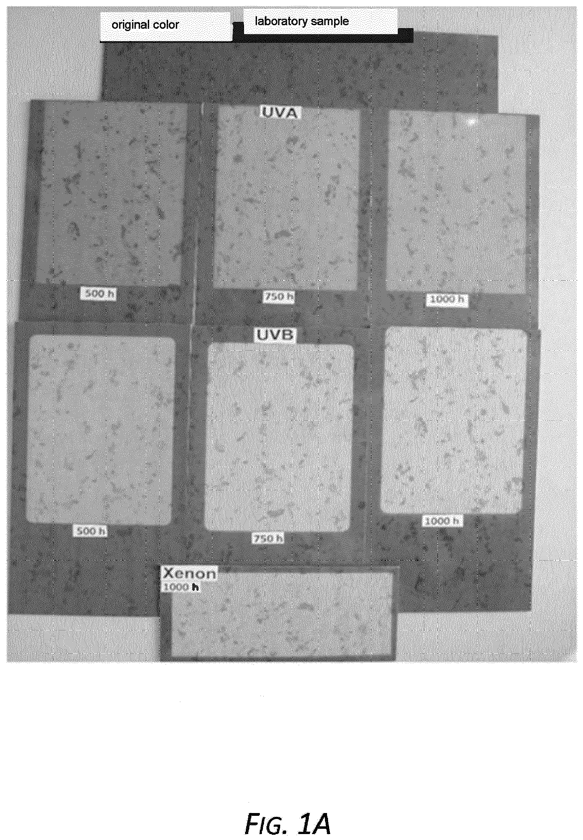

For example, the finish can mimic the appearance of new metallic copper when initially applied and then change in appearance to a green finish upon exposure to ultraviolet radiation. As shown in Figure 1A, and described in terms of the CIE-LAB* values below, the original finish of the aluminum sample is brown/copper colored. The original finish of the aluminum sample (i.e., the brown/copper colored finish) had an L* value of 36.15, an a* value of 19.38, and a b* value of 15.01. After exposure to ultraviolet-B radiation for 500 hours, the sample color shifted from the brown/copper color to a speckled green patina color. After 1000 hours of exposure to ultraviolet-B radiation, the brown/copper color is no longer visible; only the base layers of green with patina printed layer are visible. After exposure to ultraviolet-B radiation for 1000 hours, the L* value changed to 64.06, the a* value changed to -12.60, and the b* value changed to 0.27. The change in the a* value from positive to negative indicated a shift from having a red hue to having a green hue, mimicking the oxidation of copper.

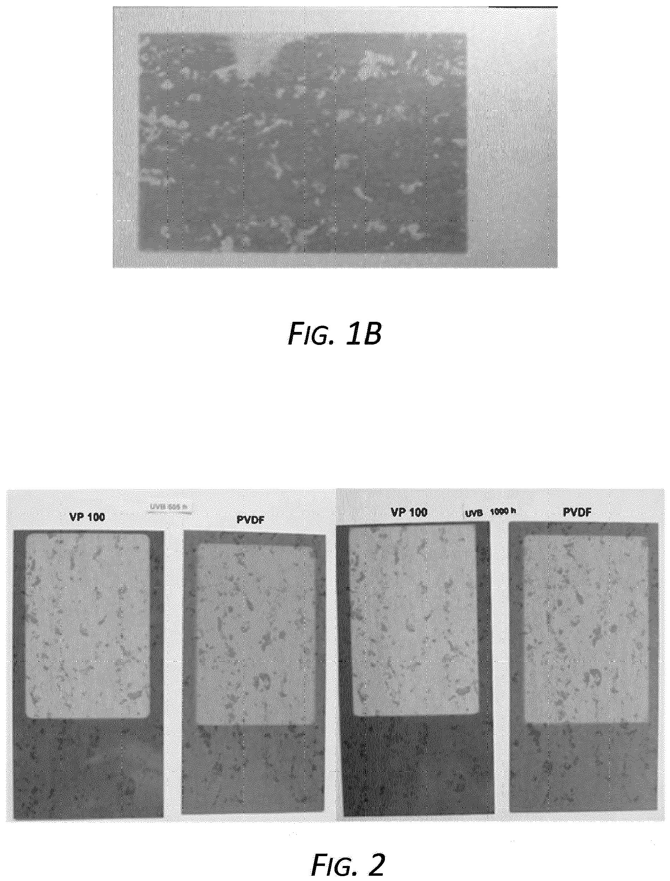

In another example, the finish can mimic the appearance of new metallic zinc when initially applied and then change in appearance to an old zinc upon exposure to ultraviolet radiation (i.e., a weathered zinc which is similar in appearance to a zinc that has been exposed to light for a period of time). As shown in Figure 1B, after exposure to light for a period of time, the sample color has shifted to an old zinc appearance.

In some examples, the finish may comprise multiple layers. For example, the finish may be a 2-layer system, with a colored base coating being the first layer. When the colorant particles in the clear coating lose their coloration, the colored base coating becomes visible.

In other examples, the finish may be a 3-layer system. In other words, the multi-layered finish coated substrate can optionally include a third layer. The third layer can include a pigment or a dye. Optionally, the third layer can include a printed coating. The printed coating can include, for example, a wood-grain effect, a patina effect, or an animal print effect. The third layer can be adhered to the base coating layer. Optionally, the third layer is adjacent to both the base coating layer (on one side) and to the clear coating layer (on another side). In other words, the third layer can be sandwiched between the base coating layer and the clear coating layer. In some examples, the colored base coating can be the layer in contact with the substrate, the clear coating can be the outermost layer, and the third layer can be present between the base coating and the clear coating. Optionally, the third layer can partially cover the colored base coating. When the colorant particles in the clear coating lose their coloration, the second layer and visible portion of the first layer may become visible. In further examples, the finish may be 4-layers or more.

The polymer used in the clear coating may impact the color changing effect of the finish. The UV-absorption of the polymer in the resin system may be matched to the finish to achieve the desired rate of color change in the finish. In some examples, the clear coating may use a polyester resin system. In some examples, the clear coating may include a polyvinylidene fluoride (PVDF) resin system.

The finish can be used to coat a substrate. Optionally, the substrate includes a metal substrate, such as an aluminum substrate or a steel substrate. For example, the finish can be applied to a roofing panel, a coil, or other suitable aluminum or steel products. Optionally, the aluminum substrate includes a 1xxx series aluminum alloy, a 2xxx series aluminum alloy, a 3xxx series aluminum alloy, a 4xxx series aluminum alloy, a 5xxx series aluminum alloy, a 6xxx series aluminum alloy, a 7xxx series aluminum alloy, or an 8xxx series aluminum alloy.

Suitable 1xxx series aluminum alloys for use as the aluminum substrate include, for example, AA1050, AA1060, AA1070, AA1100, AA1100A, AA1200, AA1200A, AA1300, AA1110, AA1120, AA1230, AA1230A, AA1235, AA1435, AA1145, AA1345, AA1445, AA1150, AA1350, AA1350A, AA1450, AA1370, AA1275, AA1185, AA1285, AA1385, AA1188, AA1190, AA1290, AA1193, AA1198, and AA1199.

Suitable 2xxx series aluminum alloys for use as the aluminum substrate include, for example, AA2001, A2002, AA2004, AA2005, AA2006, AA2007, AA2007A, AA2007B, AA2008, AA2009, AA2010, AA2011, AA2011A, AA2111, AA2111A, AA2111B, AA2012, AA2013, AA2014, AA2014A, AA2214, AA2015, AA2016, AA2017, AA2017A, AA2117, AA2018, AA2218, AA2618, AA2618A, AA2219, AA2319, AA2419, AA2519, AA2021, AA2022, AA2023, AA2024, AA2024A, AA2124, AA2224, AA2224A, AA2324, AA2424, AA2524, AA2624, AA2724, AA2824, AA2025, AA2026, AA2027, AA2028, AA2028A, AA2028B, AA2028C, AA2029, AA2030, AA2031, AA2032, AA2034, AA2036, AA2037, AA2038, AA2039, AA2139, AA2040, AA2041, AA2044, AA2045, AA2050, AA2055, AA2056, AA2060, AA2065, AA2070, AA2076, AA2090, AA2091, AA2094, AA2095, AA2195, AA2295, AA2196, AA2296, AA2097, AA2197, AA2297, AA2397, AA2098, AA2198, AA2099, and AA2199.

Suitable 3xxx series aluminum alloys for use as the aluminum substrate include, for example, AA3002, AA3102, AA3003, AA3103, AA3103A, AA3103B, AA3203, AA3403, AA3004, AA3004A, AA3104, AA3204, AA3304, AA3005, AA3005A, AA3105, AA3105A, A.A3105B, AA3007, AA3107, AA3207, AA3207A, AA3307, AA3009, AA3010, AA3110, AA3011, AA3012, AA3012A, AA3013, AA3014, AA3015, AA3016, AA3017, AA3019, AA3020, AA3021, AA3025, AA3026, AA3030, AA3130, and AA3065.

Suitable 4xxx series aluminum alloys for use as the aluminum substrate include, for example, AA4004, AA4104, AA4006, AA4007, AA4008, AA4009, AA4010, AA4013, AA4014, AA4015, AA4015A, AA4115, AA4016, AA4017, AA4018, AA4019, AA4020, AA4021, AA4026, AA4032, AA4043, AA4043A, AA4143, AA4343, AA4643, AA4943, AA4044, AA4045, AA4145, AA4145A, AA4046, AA4047, AA4047A, and AA4147.

Suitable 5xxx series aluminum alloys for use as the aluminum substrate include, for example, AA5005, AA5005A, AA5205, AA5305, AA5505, AA5605, AA5006, AA5106, AA5010, AA5110, AA5110A, AA5210, AA5310, AA5016, AA5017, AA5018, AA5018A, AA5019, AA5019A, AA5119, AA5119A, AA5021, AA5022, AA5023, AA5024, AA5026, AA5027, AA5028, AA5040, AA5140, AA5041, AA5042, AA5043, AA5049, AA5149, AA5249, AA5349, AA5449, AA5449A, AA5050, AA5050A, AA5050C, AA5150, AA5051, AA5051A, AA5151, AA5251, AA5251A, AA5351, AA5451, AA5052, AA5252, AA5352, AA5154, AA5154A, AA5154B, AA5154C, AA5254, AA5354, AA5454, AA5554, AA5654, AA5654A, AA5754, AA5854, AA5954, AA5056, AA5356, AA5356A, AA5456, AA5456A, AA5456B, AA5556, AA5556A, AA5556B, AA5556C, AA5257, AA5457, AA5557, AA5657, AA5058, AA5059, AA5070, AA5180, AA5180A, AA5082, AA5182, AA5083, AA5183, AA5183A, AA5283, AA5283A, AA5283B, AA5383, AA5483, AA5086, AA5186, AA5087, AA5187, and AA5088.

Suitable 6xxx series aluminum alloys for use as the aluminum substrate include, for example, AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6012, AA6012A, AA6013, AA6113, AA6014, AA6015, AA6016, AA6016A, AA6116, AA6018, AA6019, AA6020, AA6021, AA6022, AA6023, AA6024, AA6025, AA6026, AA6027, AA6028, AA6031, AA6032, AA6033, AA6040, AA6041, AA6042, AA6043, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6262, AA6262A, AA6063, AA6063A, AA6463, AA6463A, AA6763, A6963, AA6064, AA6064A, AA6065, AA6066, AA6068, AA6069, AA6070, AA6081, AA6181, AA6181A, AA6082, AA6082A, AA6182, AA6091, and AA6092.

Suitable 7xxx series aluminum alloys for use as the aluminum substrate include, for example, AA7019, AA7020, AA7021, AA7039, AA7072, AA7075, AA7085, AA7108, AA7108A, AA7015, AA7017, AA7018, AA7019A, AA7024, AA7025, AA7028, AA7030, AA7031, AA7035, AA7035A, AA7046, AA7046A, AA7003, AA7004, AA7005, AA7009, AA7010, AA7011, AA7012, AA7014, AA7016, AA7116, AA7122, AA7023, AA7026, AA7029, AA7129, AA7229, AA7032, AA7033, AA7034, AA7036, AA7136, AA7037, AA7040, AA7140, AA7041, AA7049, AA7049A, AA7149, AA7249, AA7349, AA7449, AA7050, AA7050A, AA7150, AA7250, AA7055, AA7155, AA7255, AA7056, AA7060, AA7064, AA7065, AA7068, AA7168, AA7175, AA7475, AA7076, AA7178, AA7278, AA7278A, AA7081, AA7181, AA7185, AA7090, AA7093, AA7095, and AA7099.

Suitable 8xxx series aluminum alloys for use as the aluminum substrate include, for example, AA8005, AA8006, AA8007, AA8008, AA8010, AA8011, AA8011A, AA8111, AA8211, AA8112, AA8014, AA8015, AA8016, AA8017, AA8018, AA8019, AA8021, AA8021A, AA8021B, AA8022, AA8023, AA8024, AA8025, AA8026, AA8030, AA8130, AA8040, AA8050, AA8150, AA8076, AA8076A, AA8176, AA8077, AA8177, AA8079, AA8090, AA8091, and AA8093.

### Temperature-Control Coatings and Coated Substrates

A temperature-control coating can be prepared from a coating system that includes a pigment. The pigment for use in the coating system absorbs electromagnetic radiation at a wavelength of from about 400 nm to about 700 nm (e.g., from about 450 nm to about 650 nm). For example, the pigment absorbs electromagnetic radiation (e.g., light) at a wavelength of about 400 nm, about 450 nm, about 500 nm, about 550 nm, about 600 nm, about 650 nm, or about 700 nm. The pigment is also transparent to electromagnetic radiation at a wavelength above about 700 nm. For example, the pigment is transparent to electromagnetic radiation (e.g., near-infrared radiation) at a wavelength from above about 700 nm to about 2500 nm. The concentration of the pigment in the coating system can be from about 0.01 wt. % to about 30 wt. %. For example, the concentration of the pigment in the coating system can be from about 0.05 wt. % to about 25 wt. %, from about 0.1 wt. % to about 20 wt. %, from about 0.5 wt. % to about 15 wt. %, from about 1 wt. % to about 10 wt. %, or from about 2 wt. % to about 8 wt. %. The concentration can optionally be about 0.01 wt. %, about 0.02 wt. %, about 0.03 wt. %, about 0.04 wt. %, about 0.05 wt. %, about 0.06 wt. %, about 0.07 wt. %, about 0.08 wt. %, about 0.09 wt. %, about 0.1 wt. %, about 0.2 wt. %, about 0.3 wt. %, about 0.4 wt. %, about 0.5 wt. %, about 0.6 wt. %, about 0.7 wt. %, about 0.8 wt. %, about 0.9 wt. %, about 1.0 wt. %, about 1.5 wt. %, about 2.0 wt. %, about 2.5 wt. %, about 3.0 wt. %, about 3.5 wt. %, about 4.0 wt. %, about 4.5 wt. %, about 5.0 wt. %, about 5.5 wt. %, about 6.0 wt. %, about 6.5 wt. %, about 7.0 wt. %, about 7.5 wt. %, about 8.0 wt. %, about 8.5 wt. %, about 9.0 wt. %, about 9.5 wt. %, about 10.0 wt. %, about 10.5 wt. %, about 11.0 wt. %, about 11.5 wt. %, about 12.0 wt. %, about 12.5 wt. %, about 13.0 wt. %, about 13.5 wt. %, about 14.0 wt. %, about 14.5 wt. %, about 15.0 wt. %, about 15.5 wt. %, about 16.0 wt. %, about 16.5 wt. %, about 17.0 wt. %, about 17.5 wt. %, about 18.0 wt. %, about 18.5 wt. %, about 19.0 wt. %, about 19.5 wt. %, about 20.0 wt. %, about 20.5 wt. %, about 21.0 wt. %, about 21.5 wt. %, about 22.0 wt. %, about 22.5 wt. %, about 23.0 wt. %, about 23.5 wt. %, about 24.0 wt. %, about 24.5 wt. %, about 25.0 wt. %, about 25.5 wt. %, about 26.0 wt. %, about 26.5 wt. %, about 27.0 wt. %, about 27.5 wt. %, about 28.0 wt. %, about 28.5 wt. %, about 29.0 wt. %, about 29.5 wt. %, or about 30.0 wt. %.

The coating system can be applied to a metal substrate to form a coated metal substrate. In some examples, the coated metal substrate includes a metal substrate and a coating layer. In some examples, the coated metal substrate includes a metal substrate, a white-colored base layer, and a coating layer.

The metal substrate can be made from aluminum (e.g., an aluminum alloy, as described above) or steel. In some examples, the metal substrate can be in the form of a coil or a roofing panel. In some examples, the metal substrate may have a smooth surface. In other examples, the metal substrate may have a wrinkled surface. The metal substrate can include at least one surface that reflects electromagnetic radiation at a wavelength above about 700 nm.

A white-colored base layer is adhered to the metal substrate and a coating layer is adhered to the white-colored base layer. The coating layer is prepared from the coating system described above. Specifically, the coating layer includes a pigment that absorbs electromagnetic radiation at a wavelength from about 400 nm to about 700 nm and is transparent to electromagnetic radiation at a wavelength above about 700 nm, as described above. The pigment can be, for example, an organic black pigment such as a perylene black. The coating layer can additionally include other pigments, dyes, and suitable additives (e.g., absorbents).

The dried coating layer includes from about 0.01 wt. % to about 30 wt. % of the pigment. For example, the concentration of the pigment in the dried coating layer can be from about 0.05 wt. % to about 25 wt. %, from about 0.1 wt. % to about 20 wt. %, from about 0.5 wt. % to about 15 wt. %, from about 1 wt. % to about 10 wt. %, or from about 2 wt. % to about 8 wt. %. The concentration can optionally be about 0.01 wt. %, about 0.02 wt. %, about 0.03 wt. %, about 0.04 wt. %, about 0.05 wt. %, about 0.06 wt. %, about 0.07 wt. %, about 0.08 wt. %, about 0.09 wt. %, about 0.1 wt. %, about 0.2 wt. %, about 0.3 wt. %, about 0.4 wt. %, about 0.5 wt. %, about 0.6 wt. %, about 0.7 wt. %, about 0.8 wt. %, about 0.9 wt. %, about 1.0 wt. %, about 1.5 wt. %, about 2.0 wt. %, about 2.5 wt. %, about 3.0 wt. %, about 3.5 wt. %, about 4.0 wt. %, about 4.5 wt. %, about 5.0 wt. %, about 5.5 wt. %, about 6.0 wt. %, about 6.5 wt. %, about 7.0 wt. %, about 7.5 wt. %, about 8.0 wt. %, about 8.5 wt. %, about 9.0 wt. %, about 9.5 wt. %, about 10.0 wt. %, about 10.5 wt. %, about 11.0 wt. %, about 11.5 wt. %, about 12.0 wt. %, about 12.5 wt. %, about 13.0 wt. %, about 13.5 wt. %, about 14.0 wt. %, about 14.5 wt. %, about 15.0 wt. %, about 15.5 wt. %, about 16.0 wt. %, about 16.5 wt. %, about 17.0 wt. %, about 17.5 wt. %, about 18.0 wt. %, about 18.5 wt. %, about 19.0 wt. %, about 19.5 wt. %, about 20.0 wt. %, about 20.5 wt. %, about 21.0 wt. %, about 21.5 wt. %, about 22.0 wt. %, about 22.5 wt. %, about 23.0 wt. %, about 23.5 wt. %, about 24.0 wt. %, about 24.5 wt. %, about 25.0 wt. %, about 25.5 wt. %, about 26.0 wt. %, about 26.5 wt. %, about 27.0 wt. %, about 27.5 wt. %, about 28.0 wt. %, about 28.5 wt. %, about 29.0 wt. %, about 29.5 wt. %, or about 30.0 wt. %.

Upon application of the coating layer to the base layer, the coating layer can exhibit a black color or a dark color. As used herein, a dark color refers to a color having a lightness L* that is lower than 40, when measured according to the following parameters: CIE-LAB*, Light source: D65, Observer: 10°, Geometry: 45°/0° specular excluded. The coated metal substrate including the base layer and the coating layer as described herein has a solar reflective index (SRI) that is similar to that of a white pigment. For example, the coated metal substrate has an SRI of at least about 50 (e.g., at least about 51, at least about 52, at least about 53, at least about 54, at least about 55, at least about 56, at least about 57, at least about 58, at least about 59, at least about 60, at least about 61, at least about 62, at least about 63, at least about 64, at least about 65, at least about 66, at least about 67, at least about 68, at least about 69, at least about 70, at least about 71, at least about 72, at least about 73, at least about 74, at least about 75, at least about 76, at least about 77, at least about 78, at least about 79, at least about 80, at least about 81, at least about 82, at least about 83, at least about 84, or at least about 85). As such, the coated metal substrate exhibits a temperature after exposure to sunlight that is similar to that of a metal substrate coated with a white pigment and is considerably lower than that exhibited by a metal substrate coated with carbon black pigments. A metal substrate coated with a carbon black pigment is referred to herein as a control coated metal substrate. For example, the coated metal substrate described herein can have an end temperature that is at least 15 °C lower than a control coated metal substrate after both substrates have been exposed to approximately one hour of sunlight. The end temperature can be at least 20 °C lower or at least 25 °C lower than the control coated metal substrate.

### Method of Applying Finishes

Also described herein are methods for applying a color-changing finish to a metal substrate (e.g., an aluminum or steel substrate). In some examples, a method comprises applying a base coating component to the surface of a substrate. The base coating component can be applied using any technique, including dipping and/or spraying. The base coating component can be dried to form a base coating layer. The base coating layer has a thickness ranging from about 3 µm to about 25 µm (e.g., from about 5 µm to about 20 µm or from about 10 µm to about 15 µm). In some examples, the base coating layer can have a thickness of about 3 µm, about 4 µm, about 5 µm, about 6 µm, about 7 µm, about 8 µm, about 9 µm, about 10 µm, about 11 µm, about 12 µm, about 13 µm, about 14 µm, about 15 µm, about 16 µm, about 17 µm, about 18 µm, about 19 µm, about 20 µm, about 21 µm, about 22 µm, about 23 µm, about 24 µm, or about 25 µm.

In some examples, a clear coating component can then be applied to the base coating component or to an intervening layer. The clear coating component can include non-lightfast colorant particles in a heterogeneous or homogeneous mixture. The clear coating component can then be dried to form a clear coating layer. The clear coating layer can have a thickness ranging from about 3 to about 50 µm (e.g., from about 5 µm to about 40 µm or from about 10 µm to about 30 µm). In some examples, the clear coating layer can have a thickness of about 3 µm, about 4 µm, about 5 µm, about 6 µm, about 7 µm, about 8 µm, about 9 µm, about 10 µm, about 11 µm, about 12 µm, about 13 µm, about 14 µm, about 15 µm, about 16 µm, about 17 µm, about 18 µm, about 19 µm, about 20 µm, about 21 µm, about 22 µm, about 23 µm, about 24 µm, about 25 µm, about 26 µm, about 27 µm, about 28 µm, about 29 µm, about 30 µm, about 31 µm, about 32 µm, about 33 µm, about 34 µm, about 35 µm, about 36 µm, about 37 µm, about 38 µm, about 39 µm, about 40 µm, about 41 µm, about 42 µm, about 43 µm, about 44 µm, about 45 µm, about 46 µm, about 47 µm, about 48 µm, about 49 µm, or about 50 µm.

Optionally, the method can include applying a third coating component and drying the third coating component to form a third layer. The steps of applying the third coating component and drying the third coating component can be performed after the step of drying the base coating and before the step of applying the clear coating. Optionally, the third coating component includes a printed coating component. The printed coating layer can have a thickness ranging from about 0.5 to about 30 µm (e.g., from about 1 µm to about 25 µm or from about 10 µm to about 15 µm). In some examples, the printed coating layer can have a thickness of about 0.5 µm, about 1 µm, about 2 µm, about 3 µm, about 4 µm, about 5 µm, about 6 µm, about 7 µm, about 8 µm, about 9 µm, about 10 µm, about 11 µm, about 12 µm, about 13 µm, about 14 µm, about 15 µm, about 16 µm, about 17 µm, about 18 µm, about 19 µm, about 20 µm, about 21 µm, about 22 µm, about 23 µm, about 24 µm, about 25 µm, about 26 µm, about 27 µm, about 28 µm, about 29 µm, or about 30 µm.

Further described herein is a method for applying a temperature-control coating to a metal substrate (e.g., an aluminum or steel substrate). In some examples, the method comprises applying a white-colored base layer to the surface of a substrate. The white-colored base layer can be applied using any technique, including dipping and/or spraying. The white-colored base layer can be dried to form a base coating layer. The white-colored base layer has a thickness ranging from about 3 µm to about 25 µm (e.g., from about 5 µm to about 20 µm or from about 10 µm to about 15 µm). In some examples, the white-colored base layer can have a thickness of about 3 µm, about 4 µm, about 5 µm, about 6 µm, about 7 µm, about 8 µm, about 9 µm, about 10 µm, about 11 µm, about 12 µm, about 13 µm, about 14 µm, about 15 µm, about 16 µm, about 17 µm, about 18 µm, about 19 µm, about 20 µm, about 21 µm, about 22 µm, about 23 µm, about 24 µm, or about 25 µm.

In some examples, a coating component can then be applied to the white-colored base layer. The coating component can include pigment particles that absorb electromagnetic radiation at a wavelength from about 400 nm to about 700 nm and are transparent to electromagnetic radiation at a wavelength above about 700 nm, as described above. The pigment particles can be in a heterogeneous or homogeneous mixture. The coating component can then be dried to form a coating layer. The coating layer can have a thickness ranging from about 3 to about 50 µm (e.g., from about 5 µm to about 40 µm or from about 10 µm to about 30 µm). In some examples, the coating layer can have a thickness of about 3 µm, about 4 µm, about 5 µm, about 6 µm, about 7 µm, about 8 µm, about 9 µm, about 10 µm, about 11 µm, about 12 µm, about 13 µm, about 14 µm, about 15 µm, about 16 µm, about 17 µm, about 18 µm, about 19 µm, about 20 µm, about 21 µm, about 22 µm, about 23 µm, about 24 µm, about 25 µm, about 26 µm, about 27 µm, about 28 µm, about 29 µm, about 30 µm, about 31 µm, about 32 µm, about 33 µm, about 34 µm, about 35 µm, about 36 µm, about 37 µm, about 38 µm, about 39 µm, about 40 µm, about 41 µm, about 42 µm, about 43 µm, about 44 µm, about 45 µm, about 46 µm, about 47 µm, about 48 µm, about 49 µm, or about 50 µm.

The following illustrations and examples will serve to further illustrate the present invention without, at the same time, however, constituting any limitation thereof. On the contrary, it is to be clearly understood that resort may be had to various embodiments, modifications, and equivalents thereof which, after reading the description herein, may suggest themselves to those skilled in the art without departing from the spirit of the invention. During the studies described in the following examples, conventional procedures were followed, unless otherwise stated. Some of the procedures are described below for illustrative purposes.

### ILLUSTRATIONS

Illustration 1 is a multi-layered finish coated substrate, comprising: a substrate; a base coating layer adhered to the substrate; and a clear coating layer comprising non-lightfast colorant particles having a color intensity, wherein the color intensity of the non-lightfast colorant particles decreases upon exposure to light.

Illustration 2 is the multi-layered finish coated substrate of any preceding or subsequent illustration, wherein the color intensity of the non-lightfast colorant particles decreases by at least about 10 % as compared to an original color intensity of the non-lightfast colorant particles upon exposure to light.

Illustration 3 is the multi-layered finish coated substrate of any preceding or subsequent illustration, wherein the color intensity of the non-lightfast colorant particles decreases by at least about 50 % as compared to an original color intensity of the non-lightfast colorant particles upon exposure to light.

Illustration 4 is the multi-layered finish coated substrate of any preceding or subsequent illustration, wherein the color intensity of the non-lightfast colorant particles decreases by at least about 75 % as compared to an original color intensity of the non-lightfast colorant particles upon exposure to light.

Illustration 5 is the multi-layered finish coated substrate of any preceding or subsequent illustration, wherein the color intensity of the non-lightfast colorant particles decreases by at least about 90 % as compared to an original color intensity of the non-lightfast colorant particles upon exposure to light.

Illustration 6 is the multi-layered finish coated substrate of any preceding or subsequent illustration, wherein the non-lightfast colorant particles are substantially colorless after exposure to light.

Illustration 7 is the multi-layered finish coated substrate of any preceding or subsequent illustration, wherein the non-lightfast colorant particles comprise at least one of a dye or a pigment.

Illustration 8 is the multi-layered finish coated substrate of any preceding or subsequent illustration, wherein the non-lightfast colorant particles comprise at least one olefin group.

Illustration 9 is the multi-layered finish coated substrate of any preceding or subsequent illustration, wherein the substrate comprises a metal substrate.

Illustration 10 is the multi-layered finish coated substrate of any preceding or subsequent illustration, wherein the metal substrate comprises an aluminum substrate.

Illustration 11 is the multi-layered finish coated substrate of any preceding or subsequent illustration, wherein the aluminum substrate comprises a roofing panel or a coil.

Illustration 12 is the multi-layered finish coated substrate of any preceding or subsequent illustration, wherein the metal substrate comprises a steel substrate.

Illustration 13 is the multi-layered finish coated substrate of any preceding or subsequent illustration, wherein the base coating layer comprises a pigment or a dye.

Illustration 14 is the multi-layered finish coated substrate of any preceding or subsequent illustration, wherein the base coating layer comprises a printed pattern.

Illustration 15 is the multi-layered finish coated substrate of any preceding or subsequent illustration, wherein the clear coating layer is adhered to the base coating layer.

Illustration 16 is the multi-layered finish coated substrate of any preceding or subsequent illustration, further comprising a third layer.

Illustration 17 is the multi-layered finish coated substrate of any preceding or subsequent illustration, wherein the third layer comprises a pigment or dye.

Illustration 18 is the multi-layered finish coated substrate of any preceding or subsequent illustration, wherein the third layer comprises a printed coating.

Illustration 19 is the multi-layered finish coated substrate of any preceding or subsequent illustration, wherein the printed coating comprises a wood-grain effect, a patina effect, or an animal print effect.

Illustration 20 is the multi-layered finish coated substrate of any preceding or subsequent illustration, wherein the third layer is adhered to the base coating layer and the clear coating layer is adhered to the third layer.

Illustration 21 is a coating system, comprising: a base coating component; and a clear coating component comprising non-lightfast colorant particles having a color intensity, wherein the color intensity of the non-lightfast colorant particles decreases upon exposure to light.

Illustration 22 is the coating system of any preceding or subsequent illustration, wherein the concentration of the non-lightfast colorant particles in the clear coating component is from about 0.01 wt. % to about 30 wt. %.

Illustration 23 is a method of applying a multi-layered finish to a substrate surface according to any preceding or subsequent illustration, comprising: applying a base coating component to the substrate surface; drying the base coating component to form a base coating layer; applying a clear coating component; and drying the clear coating component to form a clear coating layer.

Illustration 24 is the method of any preceding or subsequent illustration, wherein the clear coating component comprises non-lightfast colorant particles having a color intensity.

Illustration 25 is the method of any preceding or subsequent illustration, wherein a thickness of the base coating layer is from about 3 µm to about 25 µm.

Illustration 26 is the method of any preceding or subsequent illustration, wherein a thickness of the clear coating layer is from about 3 µm to about 50 µm.

Illustration 27 is the method of any preceding or subsequent illustration, further comprising applying a third coating component and drying the third coating component to form a third coating layer.

Illustration 28 is the method of any preceding or subsequent illustration, wherein the applying the third coating component and drying the third coating component steps are performed after the step of drying the base coating and before the step of applying the clear coating.

Illustration 29 is the method of any preceding or subsequent illustration, wherein the third coating component comprises a printed coating component.

Illustration 30 is a coated metal substrate, comprising: a metal substrate, wherein the metal substrate is a coil or a roofing panel; a white-colored base layer adhered to the metal substrate; and a coating layer comprising a pigment that absorbs electromagnetic radiation at a wavelength from about 400 nm to about 700 nm and is transparent to electromagnetic radiation at a wavelength above about 700 nm, wherein the coating layer is adhered to the white-colored base layer.

Illustration 31 is the coated metal substrate of any preceding or subsequent illustration, wherein the metal substrate comprises an aluminum substrate or a steel substrate.

Illustration 32 is the coated metal substrate of any preceding or subsequent illustration, wherein the metal substrate comprises a surface that reflects electromagnetic radiation at a wavelength above about 700 nm.

Illustration 33 is the coated metal substrate of any preceding or subsequent illustration, wherein the coating layer exhibits a black color.

Illustration 34 is the coated metal substrate of any preceding or subsequent illustration, wherein the pigment is an organic black pigment.

Illustration 35 is the coated metal substrate of any preceding or subsequent illustration, wherein the organic black pigment is a perylene black.

Illustration 36 is the coated metal substrate of any preceding or subsequent illustration, wherein the coated metal substrate has a solar reflective index of at least 50.

Illustration 37 is the coated metal substrate of any preceding or subsequent illustration, wherein the solar reflective index is at least 75.

Illustration 38 is the coated metal substrate of any preceding or subsequent illustration, wherein the coated metal substrate has an end temperature at least 15 °C lower than a control coated metal substrate after one hour exposure, wherein the control coated metal substrate comprises a metal substrate and a coating layer comprising carbon black pigments.

Illustration 39 is the coated metal substrate of any preceding or subsequent illustration, wherein the end temperature is at least 20 °C lower than the control coated metal substrate.

Illustration 40 is the coated metal substrate of any preceding illustration, wherein the end temperature is at least 25 °C lower than the control coated metal substrate.

### EXAMPLES

### Example 1: Exemplary colorants

Exemplary non-lightfast colorants tested are listed in Table 1 below.

**Table 1**

| | **Number** | **Color** | **Name** |
|---|---|---|---|
| 1 | C-0001 | | Keyacid Fluorescein 019187 |
| 2 | C-1000 | black | Keyfast Spirit Black X51 106 027 50 |
| 3 | C-1100 | yellow | Keyplast Yellow 6G 80220150 |
| 4 | C-1101 | yellow | Keyplast FL YellowGreen 7G 40600580 |
| 5 | C-1102 | yellow | Keyolast FL Yellow R 80604350 |
| 6 | C-1103 | yellow | Keyfast Spirit Yellow 4G 80604250 |
| 7 | C-1104 | yellow | Keyfast Spirit Yellow 2GN 80608250 |
| 8 | C-1105 | yellow | Keyfast Spirit Yellow GSB 80602852 |
| 9 | C-1300 | red | Keyfast Spirit Fire Red GLS 606-089-50 |
| 10 | C-1301 | red | Keyfast Red FB 60206065 |
| 11 | C-1302 | red | Keyplast Red A |
| 12 | C-1303 | red | Keyplast Vat Red V |
| 13 | C-1304 | red | Keyazine Red 4G |
| 14 | C-1305 | red | Keyacid Red XB 400% |
| 15 | C-1306 | red | Keyfast Spirit red 2BK 60600850 |
| 16 | C-1307 | red | Kesstone Oil red A 60602451 |
| 17 | C-1500 | blue | Keyplast Blue BGL 20206080 |
| 18 | C-1501 | blue | Keyplast Blue 6G SS Mic. 20607075 |
| 19 | C-1502 | blue | Keyfast Spirit Royal Blue 20640350 |
| 20 | C-1503 | blue | Kestone Oil Blue A |
| 21 | C-1600 | green | Keyplast Green B 40600350 |
| 22 | C-1800 | brown | Keyfast Spirit Dark Brown 5R 306 402 51 |
| 23 | C-1801 | brown | Keyacid Tartrazine WX Conc 80102371 |

### Example 2: Color-Changing Finishes

Metal substrates coated with a color-changing coating system described above and including polyester resin (VP100) or a polyvinylidene fluoride (PVDF) resin in the clear coating layer were exposed to ultraviolet light for 505 hours or 1000 hours. The polyester resin produced desirable results. The PVDF resin, however, has greater ultraviolet (UV) stability as compared to polyester resin. As shown in Figure 2, the PVDF was slow to change color from brown-orange to green patina. In both the 505 hour and 1000 hour tests, the PVDF sample exhibited less change in color after exposure to UV-B radiation as compared to the VP100 sample.

### Example 3: Temperature-Control Coatings

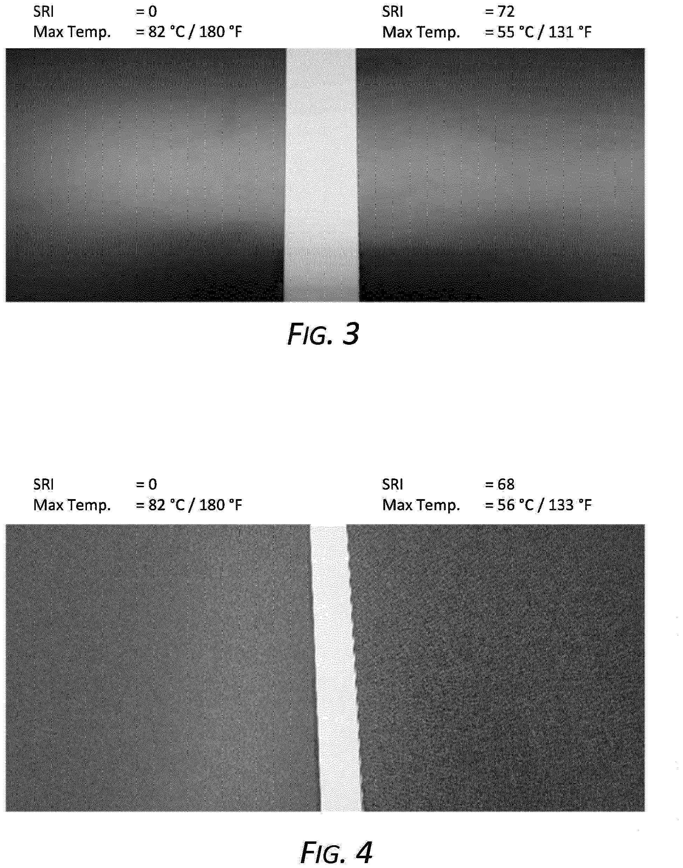

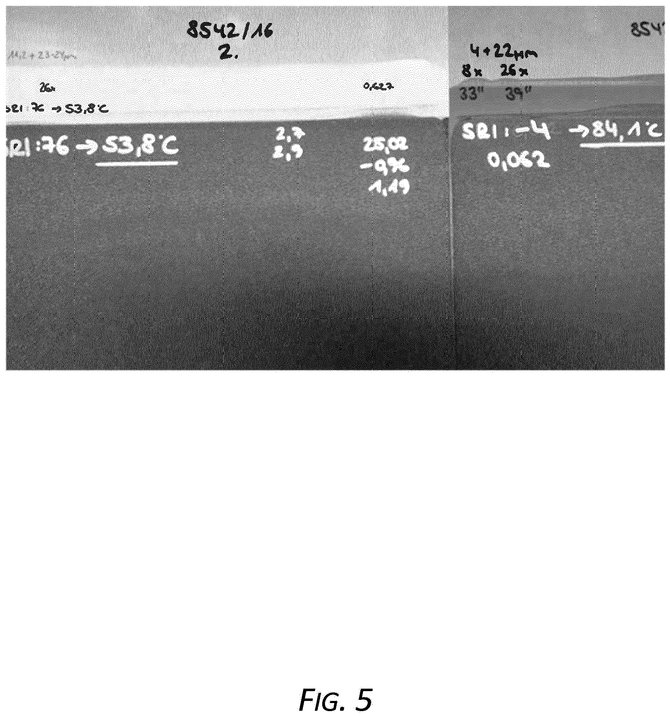

The temperature of a temperature-control coated substrate with a white base coat was compared to the temperature of a control coated metal substrate (i.e., a standard pigment coated substrate having a white base coat) after one hour of exposure to sunlight. As shown in Figures 3, 4, and 5, the temperature-control coated substrate exhibited a lower temperature after one hour exposure than the standard coated metal substrate. In Figure 3, the coated metal substrate described herein with a white base coating had an end temperature that was 27 °C lower than a control metal substrate sample with a white base coating after both substrates had been exposed to one hour of sunlight. The SRI of the temperature-control coated substrate was 72, whereas the SRI of the standard coated metal substrate was 0. In Figure 4, the coated metal substrate described herein with a white base coating had an end temperature that was 26 °C lower than a control metal substrate sample after both substrates have been exposed to one hour of sunlight. The SRI of the temperature-control coated substrate was 68, whereas the SRI of the standard coated metal substrate was 0. In Figure 5, the coated metal substrate described herein combined with a white base coat (left) had an end temperature that was 30.3 °C lower than the coated metal substrate described herein combined with a grey base coat (right) after both substrates were exposed to one hour of sunlight. The white base coating in combination with the temperature-control coating described herein exhibited a significantly lower temperature after one hour exposure.

### Example 4: Temperature-Control Coatings

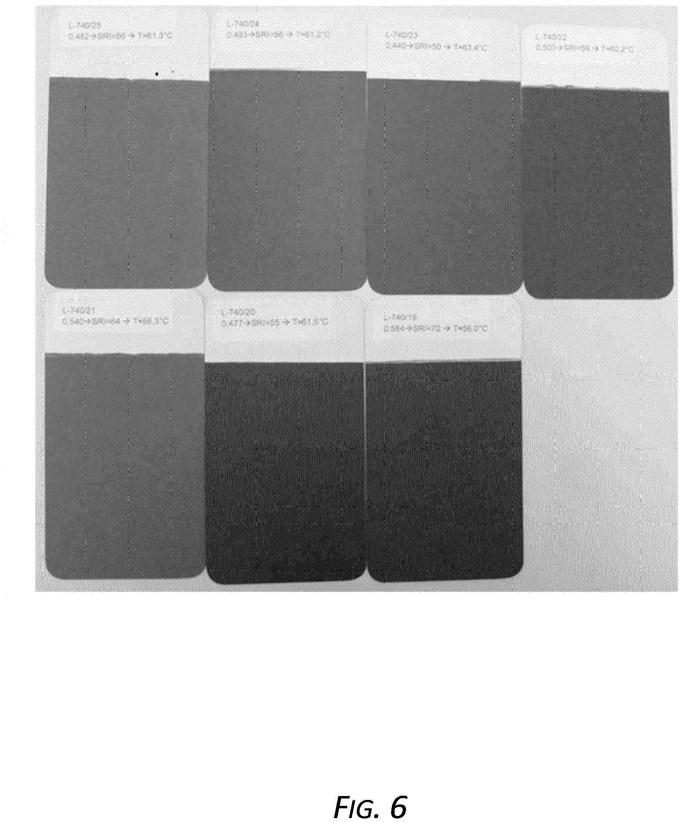

The temperatures of temperature-control coated substrates with various coatings coated onto a white base coat were compared to the temperature of a control coated metal substrate (i.e., a standard pigment coated substrate having a white base coat), each after one hour of exposure to sunlight. The temperature-control coated substrates are shown in Figure 6. The measured colorimetric values, reflectance value, and temperatures of the temperature-control coated substrates and the control coated metal substrate are detailed in Table 2.

**Table 2**

| **Sample** | **Coating color** | **L*** | **a*** | **b*** | **R** | **SRI** | **Roof temperature (°C)** | **Roof temperature (°F)** |
|---|---|---|---|---|---|---|---|---|
| 1 | blue-grey | 38.39 | -3.78 | -7.14 | 0.482 | 56 | 61.3 | 142.3 |
| 2 | anthracitegrey | 34.29 | -3.41 | -4.94 | 0.483 | 56 | 61.2 | 142.2 |
| 3 | anthraciteblue | 31.87 | -2.12 | -5.85 | 0.44 | 50 | 63.4 | 146.1 |
| 4 | anthracite | 28.24 | -2.36 | -3.28 | 0.503 | 59 | 60.2 | 140.4 |
| 5 | grey-brown | 39.54 | 0.1 | 1.46 | 0.54 | 64 | 58.3 | 136.9 |
| 6 | brown | 29.58 | 1.27 | 0.97 | 0.477 | 55 | 61.5 | 142.7 |
| 7 | grey-black | 29.96 | 2.51 | -0.28 | 0.584 | 70 | 56 | 132.8 |
| 8 | anthracite | 27.16 | -1.46 | -3.23 | 0.058 | 1 | 82.1 | 179.8 |

The color of the temperature-control coating was quantified by a colorimetric measurement using the CIE-LAB* color scale, as described above and in "Hunter L, a, b Versus CIE 1976 L*a*b*," Application Notes, Insight on Color, Vol. 13, No. 2 (2008). The CIE-LAB* color scale is based on the Opponent-Colors Theory, which assumes that receptors in the human eye perceive color as a pair of opposites: light-dark ("L* value"), red-green ("a* value"), and yellow-blue ("b* value").

As described above, the L* value refers to the lightness or darkness of the temperature-control coating. An L* value of 100 indicates the lightest color and an L value of 0 indicates the darkest color. As shown in Table 2, the temperature-control coatings described herein demonstrated an L* value from about 29 to about 39, as measured by the CIE-LAB* color scale. Also shown in Table 2, the control sample had an L* value of about 27, as measured by the CIE-LAB* color scale.

The a* value refers to the redness or greenness of the temperature-control coating. A positive a* value refers to the redness of the temperature-control coating, whereas a negative a* value refers to the greenness of the temperature-control coating. As shown in Table 2, the temperature-control coatings described herein demonstrated an a* value that varied with the perceived color of the temperature-control coating, as measured by the CIE-LAB* color scale. For example, the blue-grey Sample 1 measured a more green a* value (e.g., -3.78), and the brown Sample 6 measured a more red a* value (e.g., 1.27).

The b* value refers to the yellowness or blueness of the temperature-control coating. A positive b* value refers to the yellowness of the temperature-control coating, whereas a negative b* value refers to the blueness of the temperature-control coating. As shown in Table 2, the temperature-control coatings described herein demonstrated a b* value that varied with the perceived color of the temperature-control coating, as measured by the CIE-LAB* color scale. For example, the blue-grey Sample 1 measured a more blue b* value (e.g,. -7.14), and the grey-brown Sample 5 measured a more yellow b* value (e.g., 1.46).

The R value refers to the reflectance of the temperature-control coating. A reflectance value (R value) of 1 indicates 100 % reflectance, and an R value of 0 indicates 100 % absorption. As shown in Table 2, the control coated Sample 8 exhibited a significantly lower reflectance (e.g., 0.058) when compared to the temperature-control coated samples, having reflectance in a range of from 0.44 to 0.584.

As shown in Table 2, the temperature-control coated substrates exhibited a lower temperature (e.g., from 56 °C to 63.4 °C) after one hour exposure than the standard coated metal substrate (e.g., 82.1 °C). The SRI of the temperature-control coated substrates ranged from 50 to 70, whereas the SRI of the standard coated metal substrate was 1. Interestingly, the temperature-control coated sample having the same color as the control sample (e.g., anthracite, see Sample 4 and Sample 8), and a similar lightness (L*), was greater than 20 °C cooler after one hour of sun exposure than the control sample (Sample 8).

Most notably, the temperature-control coated samples provided lower temperatures after one hour of sunlight exposure regardless of lightness (L* value) and color. As shown in Table 2, the temperature-control coated samples demonstrated improved SRI values and significantly lower temperatures after one hour of sunlight exposure independent of the a* value and/or b* value. Thus, the darker temperature-control coatings (e.g., having L* values < 50) reflect solar radiation significantly to maintain lower substrate temperatures exposed to direct sunlight.

All patents, publications, and abstracts cited above are incorporated herein by reference in their entireties. Various embodiments of the invention have been described in fulfillment of the various objectives of the invention. It should be recognized that these embodiments are merely illustrative of the principles of the present invention. Numerous modifications and adaptations thereof will be readily apparent to those skilled in the art without departing from the spirit and scope of the present invention as defined in the following claims.

## Claims

1. A multi-layered finish coated substrate, comprising:
a substrate;
a base coating layer adhered to the substrate; and
a clear coating layer comprising non-lightfast colorant particles having a color intensity, wherein the color intensity of the non-lightfast colorant particles decreases upon exposure to light.

2. The multi-layered finish coated substrate of claim 1, wherein the color intensity of the non-lightfast colorant particles decreases by at least about 10 % as compared to an original color intensity of the non-lightfast colorant particles upon exposure to light.

3. The multi-layered finish coated substrate of claim 1 or 2, wherein the color intensity of the non-lightfast colorant particles decreases by at least about 75 % as compared to an original color intensity of the non-lightfast colorant particles upon exposure to light.

4. The multi-layered finish coated substrate of any one of claims 1-3, wherein the non-lightfast colorant particles are substantially colorless after exposure to light.

5. The multi-layered finish coated substrate of any one of claims 1-4, wherein the non-lightfast colorant particles comprise at least one of a dye or a pigment.

6. The multi-layered finish coated substrate of any one of claims 1-5, wherein the non-lightfast colorant particles comprise at least one olefin group.

7. The multi-layered finish coated substrate of any one of claims 1-6, wherein the substrate comprises an aluminum substrate.

8. The multi-layered finish coated substrate of claim 7, wherein the aluminum substrate comprises a roofing panel or a coil.

9. The multi-layered finish coated substrate of any one of claims 1-8, wherein the base coating layer comprises a pigment, a dye, or a printed pattern.

10. The multi-layered finish coated substrate of any one of claims 1-9, wherein the clear coating layer is adhered to the base coating layer.

11. The multi-layered finish coated substrate of any one of claims 1-10, further comprising a third layer.

12. The multi-layered finish coated substrate of claim 11, wherein the third layer comprises a pigment, a dye, or a printed coating.

13. The multi-layered finish coated substrate of claim 12, wherein the printed coating comprises a wood-grain effect, a patina effect, or an animal print effect.

14. The multi-layered finish coated substrate of any one of claims 11-13, wherein the third layer is adhered to the base coating layer and the clear coating layer is adhered to the third layer.
